(19) Europäisches Patentamt
European Patent Office
Office européen des brevets

(11) **EP 2 056 142 A1**

(12) **EUROPEAN PATENT APPLICATION**

(43) Date of publication:
**06.05.2009 Bulletin 2009/19**

(51) Int Cl.:
*G02B 6/34* (2006.01)       *G02B 6/293* (2006.01)
*G02B 6/42* (2006.01)

(21) Application number: **08017790.0**

(22) Date of filing: **10.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.10.2007 JP 2007266033**

(71) Applicant: **Hitachi Communication Technologies, Ltd.**
**Tokyo 140-0013 (JP)**

(72) Inventors:
• **Hosomi, Kazuhiko**
 **Chiyoda-ku**
 **Tokyo 100-8220 (JP)**

• **Sagawa, Misuzu**
 **Chiyoda-ku**
 **Tokyo 100-8220 (JP)**
• **Sugawara, Toshiki**
 **Chiyoda-ku**
 **Tokyo 100-8220 (JP)**
• **Aoki, Masahiro**
 **Chiyoda-ku**
 **Tokyo 100-8220 (JP)**

(74) Representative: **Matias, Bruno M.**
 **Beetz & Partner**
 **Patentanwälte**
 **Steinsdorfstrasse 10**
 **80538 München (DE)**

(54) **Optical module**

(57) An optical module comprising: a submount provided on a CAN stem; light-emitting device 11 and a light-receiving device 12; a CAN cap or package; and an optical multiplexer/demultiplexer 2 having a wavelength selective filter on a substrate 5 that has transmissivity to passing light and a mirror, where an extending direction of the optical multiplexer/demultiplexer 2 is fixed in the CAN cap or the package being tilted by an angle θ (θ ≠ 2Nπ, N = 0, 1, 2, ...) in a two-dimensional cross section with respect to one surface of an optical device mounting board, outgoing light from the light-emitting device 11 passes through the wavelength selective filter and the substrate 5 and enters an optical fiber outside the cap, and outgoing light from the optical fiber enters the optical multiplexer/demultiplexer 2 and is reflected by the wavelength selective filter and further reflected by the mirror, and then exits the optical multiplexer/demultiplexer 2 to enter the light-receiving device 12.

FIG. 1

**Description**

**TECHNICAL FIELD OF THE INVENTION**

The present invention relates to an optical module. More particularly, the present invention relates to a structure of a bi-directional optical transmitter and receiver module which multiplexes or demultiplexes light having a plurality of wavelengths.

**BACKGROUND OF THE INVENTION**

In recent years, the information communication fields have been swiftly promoting data communication traffic for exchanging large-capacity data by using light. Particularly, promotion of broadband communication for data access lines has been accelerated along with the explosive growth of internet communication, and FTTH (Fiber To The Home) service has significantly recognized to be established in the market. Among optical transport systems of FTTH, PON (Passive Optical Network) system for sharing one fiber by one or more customers currently has growing demands. The PON system splits data transmitted through one fiber from a central office to 16 to 24 fibers by a splitter to distribute data to respective customers' homes, thereby largely reducing cost for laying fibers. Further, an ONU (Optical Network Unit) is set for each customer as a terminal device, and it transfers data using a same fiber for upstream and downstream signals by wavelength division multiplexing (WDM) on downstream signals (wavelength: 1.5 $\mu$m) from the central office to the customer and upstream signals (wavelength: 1.3 $\mu$m) from the customer to the central office. Further, a dual wavelength bi-directional optical module is disposed in the ONU, and it is basically configured by a light-emitting device (LD: Laser Diode) for upstream signal transmission, a light-receiving device (PD: Photo Detector) for downstream signal reception, and a WDM filter for dividing upstream and downstream signals.

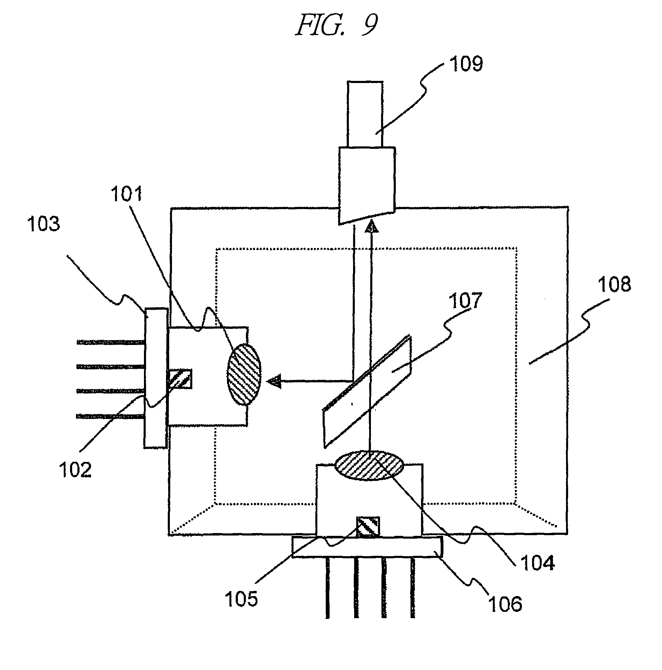

FIG. 9 shows a conventional module system. There is shown a basic configuration of a single-conductor bi-directional (BIDI: Bi-Directional) module having respective optical parts of a light-emitting device 105, a light-receiving device 102, and a wavelength selective filter 107 spatially arranged in a package 108. It is able to manufacture each optical part independently in this system, and thus it is easy to ensure a fabrication yield. Further, it is able to make an optical connection by so-called active alignment for an optical axis alignment with a fiber 109 while operating the optical devices 105 and 102 mounted in CAN packages 103 and 106 in which lenses 101 and 104 are respectively integrated, and thus there is an advantage of gaining a stable optical coupling efficiency. But, on the other hand, the number of parts and the number of processing steps are large, and thus there is a problem of disadvantage in down-sizing and reducing cost.

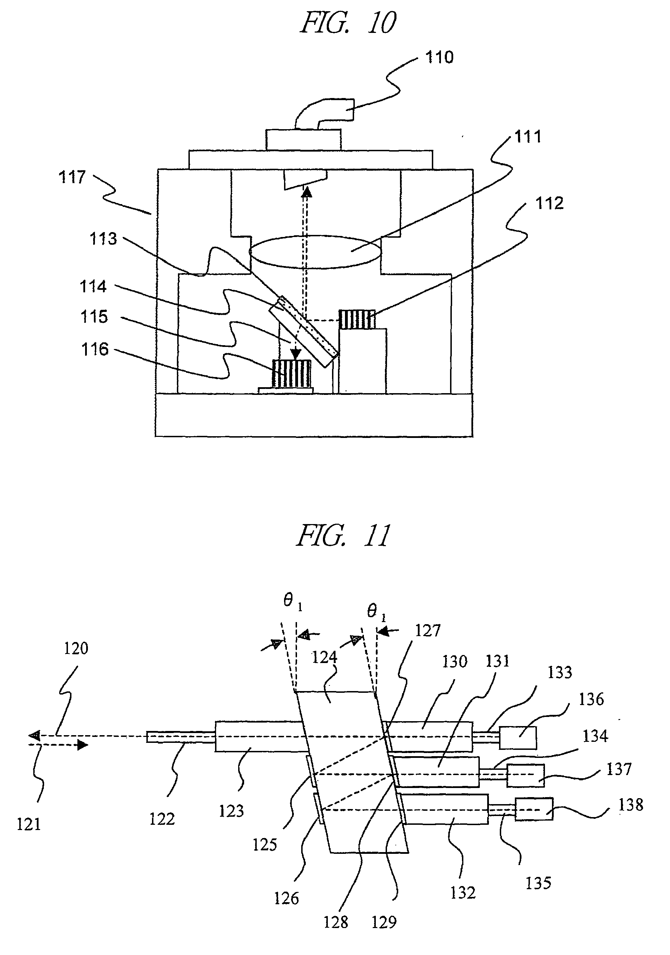

Shown in FIG. 10 is a basic configuration of a second system of a single-conductor bi-directional module disclosed by Ohki et al., IEICE Technical Report, Vol. 107, No. 7, R2007-2, pp. 7-10, Apr. 13, 2007 (Non-Patent Document 1). In this example, a light-emitting device 112, a light-receiving device 116, a wavelength selective filter 113 on a transparent substrate 114 are mounted in one package 117. The transparent substrate 114 is mounted at a predetermined angle by a supporting member 115. The light-emitting device 112 and the light-receiving device 116 are optically connected to a single-mode fiber 110 via a lens 111. A feature of this example is to down-size the module by mounting all optical parts in one package. However, same with the first example, it is required to sterically arrange the light-emitting device 112, the light-receiving device 116, and the wavelength selective, filter 113, and it poses problems such that the down-sizing makes it necessary to mount them highly accurately, and the process of axis alignment becomes complex. Moreover, in consideration of extensibility, for example, in the case of a triple-wavelength bi-directional optical module, it is necessary to make the number of optical parts and the mounting area about two times larger at least, and thus it makes down-sizing and cost reduction much more difficult.

To both achieve extensibility of wavelengths and reduction of size and cost at the same time, it is required to make a wavelength multiplexer/demultiplexer (optical multiplexer/demultiplexer) in a compact space. There is a method of embedding a plurality of filter units on a shared parallelogram prism or other optical block as a compact wavelength multiplexer/demultiplexer (optical multiplexer/demultiplexer). For example, a multiplexing device disclosed in Japanese Patent Application Laid-Open publication No. S61-103110 (Patent Document 1) has a wavelength selective filters 127, 128 and 129, and mirrors 125 and 126 each being installed at a predetermined position on a substrate 124 which is transparent to a wavelength of light passing through the substrate as shown in FIG. 11. A fiber 122 through which an output light beam 120 and an input light beam 121 propagate is optically connected to a multiplexer/demultiplexer that includes the transparent substrate 124 via a rod lens 123. A specific wavelength of the light beam is transmitted and other specific wavelengths are reflected by the respective optical filters sequentially in the multiplexer/demultiplexer 124, so that the light beam forms a zigzag light path. A specific wavelength of light is rejected or added by each filter. However, the configuration disclosed in FIG. 11 has optical devices 136, 137, and 138 and the multiplexer/demultiplexer 124 are coupled via the rod lenses 130, 131, and 132 and the fibers 133, 134, and 135, thus the number of parts is large and it makes down-sizing difficult.

## SUMMARY OF THE INVENTION

As mentioned in the foregoing, conventional techniques have many mounting steps of optical parts including mounting of optical devices. In addition, there is small margin in positional accuracy of the wavelength multiplexer/ demultiplexer (optical multiplexer/demultiplexer), especially in angle shift, and thus highly accurate mounting is required and it is difficult to ensure fabrication yield. Further, in consideration of extensibility, the number of optical parts and the mounting area are necessary to be two times larger and it is required to make down-sizing and highly accurate mounting of optical parts, and thus it becomes much more difficult to ensure yield.

An object of the present invention is to provide a low-cost optical module.

Consequently, an object of the embodiments of the present invention relates to an optical module used as a terminal device in wavelength multiple optical transmission and single-conductor bi-directional optical transmission for transmitting light having a plurality of wavelengths by one optical fiber, and the object is to provide an optical module capable of achieving down-sizing and high yield by largely reducing the number of mounting steps with maintaining low-loss optical properties and high reliability.

Summary of the present invention is as follows.

An optical module comprising: a submount provided on a CAN stem; at least a first light-emitting device and a first light-receiving device provided on one surface of the submount and using a wavelength different to each other; a CAN cap fixed on the CAN stem and having a hole on the top for taking light in and out; and/or an optical multiplexer/ demultiplexer formed in a parallel-plate shape and having a first wavelength selective filter on one surface of a first substrate that has transmissivity to passing light, and/or a mirror on another surface facing the one surface of the first substrate. An extending direction of the optical multiplexer/demultiplexer can be fixed in the CAN cap or a CAN package (note that, the package can be other packages than a CAN package, for example, it can be a molded optical device, and the same can be applied in the following) so as to be tilted by an angle θ (where θ ≠ 2Nπ, N = 0, 1, 2 ...) in a two-dimensional cross section with respect to a one surface of an optical device mounting board. Outgoing light from the first light-emitting device can pass through the first wavelength selective filter and the first substrate and enter an optical fiber outside the cap. Outgoing light from the optical fiber can enter the optical multiplexer/demultiplexer and be reflected by the first wavelength selective filter and further be reflected by the mirror, and can then exit the optical multiplexer/ demultiplexer to enter the first light-receiving device.

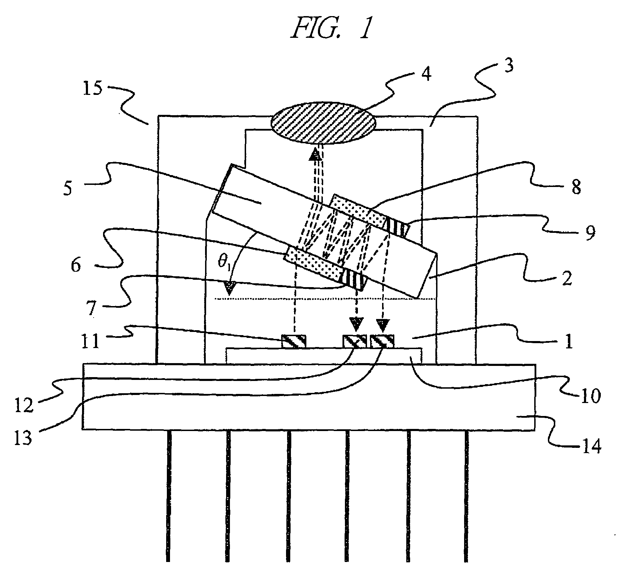

A system for solving the problems mentioned above will be described with reference to FIG. 1. FIG. 1 shows an example of a module that is a so-called optical triplexer of a bidirectional optical transceiver module using triple wavelengths to which the present invention is applied.

As shown in FIG. 1, in the present invention, there are prepared: an optical device mounting board 1 to which a plurality of optical devices 11, 12, and 13 (more particularly, a light-emitting device 11, and light-receiving devices 12 and 13) are disposed on a same plane (herein, a member in which the optical devices 11, 12, and 13 are mounted on a submount 10 will be called the optical device mounting board 1); and an optical multiplexer/demultiplexer 2 having a wavelength selective filter and a mirror mounted typically on front and rear surfaces of a transparent substrate. The optical multiplexer/demultiplexer 2 is embedded inside a package at an angle (θ ≠ 180°) so that a surface for mounting the optical devices and a surface of the filter are not parallel to each other with respect to one surface of the board 1. To an inner surface of the package 3, for example, concave and convex portions are provided so that the optical multiplexer/demultiplexer 2 and the optical device mounting board 1 are embedded in non-parallel to each other. Optical devices using different wavelengths to each other are mounted at predetermined positions on the optical devices mounting board 1. The optical multiplexer/demultiplexer 2 has a substrate 5 as a supporting substrate having a pair of facing surfaces in parallel and a predetermined thickness and made of a material transparent to wavelengths of the light to use. At least one kind of wavelength selective filter is provided on one of the pair of surfaces in parallel, and a mirror for reflecting light having a wavelength not selected by the first filter is provided to the other surface. At this time, a window for the light to enter and exit is provided to the filter and mirror.

Next, an operation of the module of the present invention will be described. Light having a wavelength $\lambda_1$ exited from the light-emitting device 11 reaches to a first wavelength selective filter 6. The first wavelength selective filter 6 transmits the wavelength $\lambda_1$, and the transparent substrate 5 refracts the light to parallel shift the light path, and the light-emitting device 11 and the optical fiber are optically connected so that the light enters an external optical fiber (not shown) via a package lens 4. At the same time, the optical fiber and the light-receiving devices 12 and 13 are optically connected so that the wavelengths $\lambda_2$ and $\lambda_3$ of light exited from the optical fiber respectively enter the predetermined light-receiving devices 12 and 13.

Outgoing light from the optical fiber having the wavelengths $\lambda_2$ and $\lambda_3$ multiplexed enters the transparent glass substrate 5 to be refracted, and then reaches to the first wavelength selective filter 6. The wavelengths $\lambda_2$ and $\lambda_3$ are reflected and reach a first mirror 8 facing the first wavelength selective filter 6. The light reflected by the first mirror 8 enters at a position different from the first incident position on the surface of the first filter 6. In a simplest design, the light once reflected by the mirror 8 enters a second filter, while it is designed in the present configuration such that the reflected light from the mirror is again enters to the filter 6 to go and return between the filter 6 and the mirror 8 once more. The light goes and returns between the filter 6 and the mirror 8 twice and then enters to a second wavelength selective filter 7. The wavelength $\lambda_2$ and the wavelength $\lambda_3$ are divided here, and the light transmits a wavelength $\lambda_2$ filter and gets refracted, then enters the light-receiving device 12 perpendicularly. On the other hand, the wavelength $\lambda_3$ is reflected by the second filter 7 and enters a mirror 9. The light reflected by the mirror 9 transmits an interface without a filter (note that, an AR coating is applied), and enters the light-receiving device 13.

As described above, since the two planes configuring the optical multiplexer/demultiplexer 2 are mounted at an angle not perpendicular to the incoming light from the fiber and an optical axis of the light-emitting device 11, the light obliquely enters the wavelength selective filter array and the mirror array, and light having a specific wavelength is removed or added at an intersection of each filter and the optical axis. That is, the optical multiplexer/demultiplexer 2 is attached to a CAN stem 14 or a CAN cap 3 with making the two planes oblique by an angle $\theta_1$ to the surface of the submount 10, so that the two planes and the optical axis of the light entering the optical multiplexer/demultiplexer 2 have an angle other than 90 degrees between each other, that is, an angle not to be orthogonal. Note that, FIG. 1 is a cross-sectional view, and a value of the angle $\theta_1$ is not changed in a direction orthogonal to the plane of paper in principle.

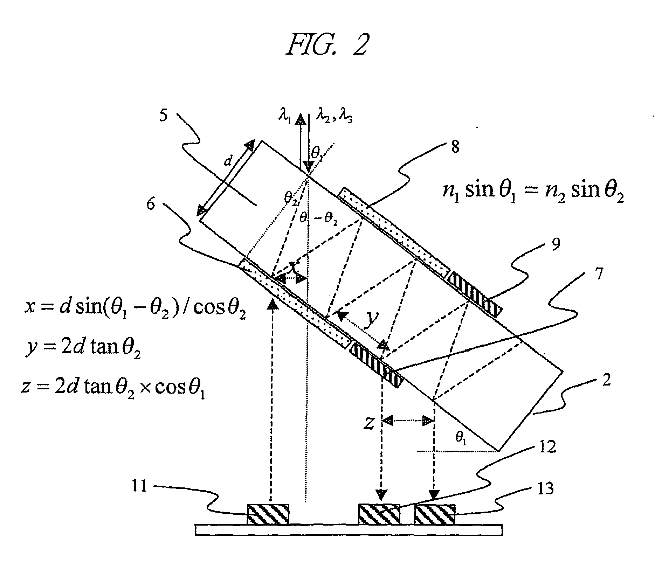

FIG. 2 quantitatively shows an operation of the optical multiplexer/demultiplexer 2 in the structure of FIG. 1. As shown in FIG. 2, a positional relationship of optical axes of respective wavelengths of light is represented by a function of a thickness of the glass substrate and angles. For example, as shown in FIG. 2, a relationship of x, y, and z. Therefore, by arranging an output (exiting) edge and an input (entering) edge of each device in the extending direction of the optical axis that is uniquely determined according to the design, optical couplings between the fiber and the optical devices can be made.

In this manner, a first feature of the present invention is that a plurality of filters are automatically aligned by only aligning a glass substrate once, thereby largely reducing steps of mounting of the devices according to the present invention.

A second feature of the present invention is that an LD and a PD are mounted in plane on an optical device mounting board, thereby largely simplifying mounting of optical devices as compared with the conventional way sterically mounting optical devices, and thus it is possible to mount highly accurately. The alignment is made by the whole optical device mounting board in an optical axis alignment, thereby reducing the number of steps as compared with the case where an optical axis alignment is individually done on each device.

As shown in FIG. 2, when taking an angle of the plane of the substrate to the surface of the submount 10 as $\theta_1$, an entering angle (incident angle) of the light entering to the optical multiplexer/demultiplexer 2 from the fiber or the optical device 11 with respect to the orthogonal direction on the surface of the substrate 5 is $\theta_1$. An angle $\theta_2$ in the substrate substance after refraction is expressed as $\theta_2 = \sin^{-1}(n_1 \cdot \sin\theta_1/n_2)$ using a refractive index outside the substrate 5: $n_1$, and a refractive index of the substrate 5: $n_2$ according to the Snell's law.

At this time, a cycle "y" of multiplex reflection inside the substrate 5 is given as $2d \cdot \tan\theta_2$ when taking the thickness of the transparent substrate 5 as "d". And, when the light to be subjected to multiplex reflection exits to a plane orthogonal to own optical axis at the time of enter as being wavelength-divided by the filter according to the principle described above, a cycle z is given as $2d \cdot \sin\theta_2 \cdot \cos\theta_1$. The cycle "z" corresponds to spacing between the devices mounted on the optical device mounting board 1, and thus it is necessary to select d and $\theta_1$ so as to maintain a suitable device spacing. Since the size of the devices is not smaller than 100 $\mu$m, the value of z is required to be larger than or equal to 100 $\mu$m.

According to the present invention, it is possible to provide an optical module with lower cost than conventional one.

## BRIEF DESCRIPTIONS OF THE DRAWINGS

FIG. 1 is a cross-sectional view showing a triple-wavelength bi-directional optical transmitter and receiver module according to a first embodiment of the present invention;

FIG. 2 is a diagram describing an operation of an optical module according to the first embodiment of the present invention;

FIG. 3 is a cross-sectional view showing a dual-wavelength bi-directional optical transmitter and receiver module according to a second embodiment of the present invention;

FIG. 4 is a cross-sectional view showing an optical module according a third embodiment of the present invention showing a structure example of a package where the optical modules of the first to second embodiments are coupled to a single mode fiber;

FIG. 5 is a configuration diagram of a planar optical module according to a fourth embodiment of the present invention;

FIG. 6 is a configuration diagram of an optical module according to a fifth embodiment of the present invention;

FIG. 7 is a cross-sectional view of an optical device package configuring the optical module according to the fifth embodiment of the present invention;

FIG. 8 is a cross-sectional view showing an optical module according to a sixth embodiment of the present invention;

FIG. 9 is a basic configuration diagram of a BIDI module according to a first system of a conventional module;

FIG. 10 is a basic configuration diagram of a one-package BIDI module according to a second system of the conventional module; and

FIG. 11 is a basic configuration of an optical multiplexer/demultiplexer of a conventional technique.

## DESCRIPTIONS OF THE PREFERRED EMBODIMENTS

According to the embodiments of the present invention, it is possible to provide an optical module and a method of manufacturing the same capable to obtain down-sizing and high yield by largely reducing the number of optical parts and mounting steps with maintaining low-loss optical property and high reliability with regard to an optical transmitter module for transmitting light having a plurality of wavelengths by multiplexing the same, an optical receiver module for receiving multiplexed light by demultiplexing the same per wavelength, or a single-conductor bi-directional optical transmitter and receiver module.

The embodiments will be described in details hereinafter.

(First Embodiment)

FIG. 1 is a cross-sectional view of an optical module according to a first embodiment of the present invention. FIG. 1 shows an example where the present invention is applied to a so-called optical triplexer of a bi-directional optical transmitter and receiver module using triple wavelengths.

FIG. 1 is an example of mounting on a CAN package, where the optical device mounting board 1 is mounted on the CAN stem 14 that has mounted thereon the submount 10 on which the light-emitting device 11 and the light-receiving devices 12, 13 are loaded, and the optical multiplexer/demultiplexer 2 is mounted to the CAN cap 3, so that a triplexer module 15 is configured. The optical devices 11, 12 and 13 use wavelengths $\lambda_1$, $\lambda_2$ and $\lambda_3$, respectively, and a magnitude relation of the wavelengths is $\lambda_1 < \lambda_2 < \lambda_3$. Note that, the magnitude relation of the wavelengths is not limited to this. The optical devices are arranged in ascending order of the using wavelengths in FIG. 1. A concave and a convex for enabling the optical multiplexer/demultiplexer 2 to be mounted are provided inside the CAN cap 3. Note that, it is only necessary to fix the optical multiplexer/demultiplexer 2 inside the CAN cap 3, and it may be fixed by any means. Therefore, it is not mandatory to provide a concave and a convex, and other than these, for example, a notch may be provided to the package member so that, for example, the optical multiplexer/demultiplexer 2 and the package member are fitted. Alternately, the package member may have both a concave and a convex and a notch.

The optical multiplexer/demultiplexer 2 has the transparent glass substrate 5 as its supporting substrate, and the first wavelength selective filter 6 and the second wavelength selective filter 7 are mounted adjacent to each other on one surface of the optical multiplexer/demultiplexer 2, and the first mirror 8 and the second mirror 9 are mounted on the other surface being parallel to and facing the former surface. The mounting of the optical multiplexer/demultiplexer 2 is performed by contour alignment of the CAN cap to the concave and convex, and adhered by a UV hardening resin. A material of the glass substrate 5 is BK7, and a thickness thereof is 1136 $\mu$m. The glass substrate is mounted so as to have an angle to the plane of the board 1 at 20°, and the "z" in FIG. 2, that is, a pitch of multiple reflections as projected on the plane is 500 $\mu$m. The wavelength selective filters are configured by a dielectric multilayered film formed of $Ta_2O_5$ and $SiO_2$. The first wavelength selective filter 6 is a filter that has a demultiplexed wavelength $\lambda_{th}$ being $\lambda_1 < \lambda_{th} < \lambda_2$, and has a properties of transmitting wavelengths of light shorter than $\lambda_{th}$ and reflecting wavelengths of light longer than $\lambda_{th}$ (so-called short-pass filter). The second wavelength selective filter 7 is a short-pass filter having a demultiplexed wavelength $\lambda_{th}$ being $\lambda_2 < \lambda_{th} < \lambda_3$. The first mirror 8 is same with the first wavelength selective filter 6, and the second mirror 9 is same with the second wavelength selective filter 7. A vertically emitting LD made by integrating micro lenses is used for the light-emitting device 11 on the optical device mounting board (optical device integrating board) 1. While an end-surface emitting LD can be used for the light-emitting device 11, it is more preferable to use the vertically emitting LD in view of simplicity of mounting, and the lens-integrating type is preferable in view of easiness of optical coupling and reduction of the number of parts. According to the same reasons, the light-receiving devices 12 and 13 are also preferable to be planer input type. While an amplifier and a capacitor are mounted in the CAN, they are same with the normal case, and thus respective illustrations are omitted herein.

Although the material of the transparent substrate 5 is only necessary to be transparent to the using wavelengths and not limited, it is preferable to be inexpensive and have a high process accuracy. BK7 has been used as a material satisfying the requirements, but of course, other glass materials, dielectrics, and semiconductors can be used.

An operation of the present configuration example will be described. The light having the wavelength $\lambda_1$ outputted from the light-emitting device 11 reaches to the first wavelength selective filter 6. The first wavelength selective filter 6

transmits the wavelength $\lambda_1$, and the light is refracted by the transparent substrate 5 to parallel shift its light path, so that the first wavelength selective filter 6 is optically connected to the external optical fiber via the package lens 4. On the other hand, the light of multiplexed wavelengths $\lambda_2$ and $\lambda_3$ outputted from the optical fiber is inputted to the transparent substrate and got refracted, and then reaches the facing first mirror 8. Since the mirror 8 is same with the first wavelength selective filter 6, the wavelengths $\lambda_2$ and $\lambda_3$ are reflected again. Herein, the reason for using the mirror 8 being same with the wavelength selective filter 6 is for improving a blocking capability to the wavelength $\lambda_1$. The wavelength $\lambda_1$ of light outputted from the light-emitting device 11 is slightly reflected on the surface of the lens 4, and other portions such as an edge face of the fiber, and becomes feedback light to be inputted again. Although the feedback light of wavelength $\lambda_1$ has a small amount of light, it becomes noise when being inputted to the light-receiving device 12 and 13. The feedback light of wavelength $\lambda_1$ is transmitted through the first wavelength selective filter 6, and a small amount thereof is reflected. Then, the reflected light is once again transmitted through the mirror 8 to further reduce the amount of light. While the present invention uses the mirror 8 being same with the first wavelength selective filter 6 according to the reasons mentioned above, if the specification of wavelength division (demultiplexing) is not severe, a normal mirror not having a wavelength dependence also works.

The light reflected by the mirror 8 is inputted to the filter surface again. In the simplest design, the light once reflected at the mirror 8 is inputted to the second filter, but the present configuration is designed to make the reflected light from the mirror 8 to be inputted onto the first wavelength selective filter 6 once again so as to go and return between the filter 6 and the mirror 8. This is for making the distance from the light-emitting device 11 to the light-receiving device 12 to be larger than the projected pitch of multiple reflections. It is because the light-emitting device to be driven in high speeds is feared to be a noise source to the light-receiving device side (called electrical crosstalk). When there is no specific reasons such as the electrical crosstalk and so forth, it is preferable to match the pitch of multiple reflections in the glass substrate 5 and the mounting pitch of the devices so that the number of reflections is made minimum.

The light which has gone back and forth twice between the first wavelength selective filter 6 and the mirror 8 is inputted to the second wavelength selective filter 7. The wavelengths $\lambda_2$ and $\lambda_3$ are demultiplexed here, and the wavelength $\lambda_2$ is transmitted to be refracted through the filter 7 and inputted perpendicular to the light-receiving device 12. On the other hand, the wavelength $\lambda_3$ is reflected to be imputed to the mirror 9. In the same reason with that for the mirror 8, a dielectric multilayered filter same with the filter 7 is used for the mirror 9. The light reflected at the mirror 9 is transmitted through an interface without the filter 7 (note that, an AR coating is applied), thereby being inputted to the light-receiving device 13.

(Second Embodiment)

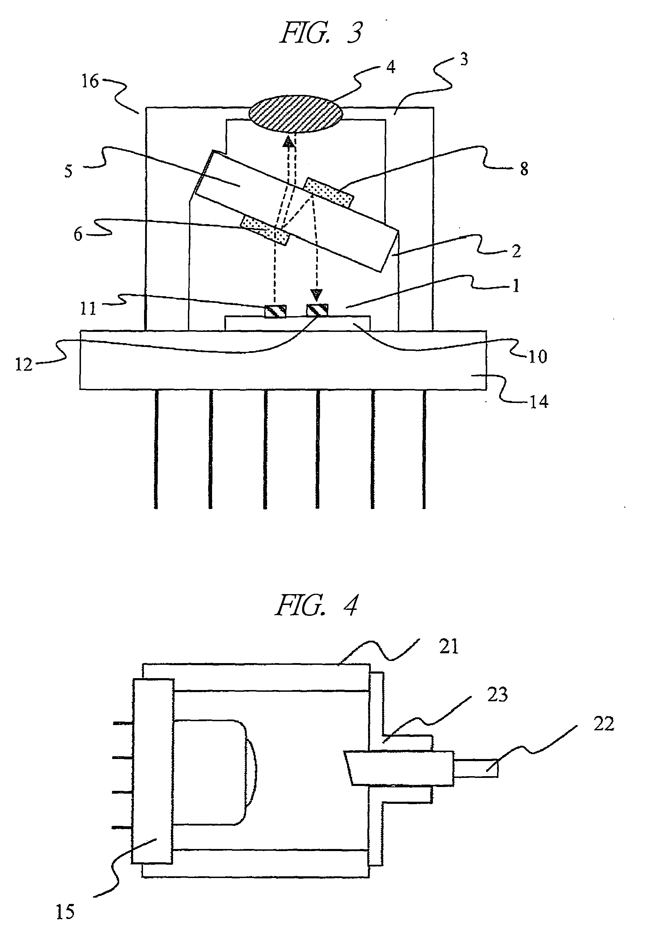

FIG. 3 is a cross-sectional view of an optical module according to a second embodiment of the present invention. The present embodiment is a configuration example where the present invention is applied to a dual-wavelength single-conductor bi-directional (BIDI) module. A BIDI module 16 is, as shown in FIG. 3, similar to the first embodiment in the point that the configuration is made by the optical device mounting board 1, the optical multiplexer/demultiplexer 2, and the CAN package 3. Meanwhile, the BIDI module transmits and receives data by a single wavelength on the upstream and a single wavelength on the downstream, i.e., dual wavelengths in total, and thus the optical devices mounted on the optical device mounting board 1 are only the light-emitting device 11 and the light-receiving device 12. And, the first wavelength selective filter 6 and the mirror 8, i.e. one type for each of filter and mirror, are mounted to the optical multiplexer/demultiplexer 2.

(Third Embodiment)

FIG. 4 is a cross-sectional view of an optical module according to a third embodiment of the present invention. The present embodiment is an example where the present invention is applied to a module having a fiber attached thereto, i.e., a so-called pigtail type module. As shown in FIG. 4, the triplexer module 15 of the first embodiment of the present invention is mounted to a coaxial module chassis 21, and a fiber 22 with a ferrule is further mounted by a sleeve 23. Although a pigtail type module is shown in the present embodiment, a resectable type module can be configured by the same configuration.

(Fourth Embodiment)

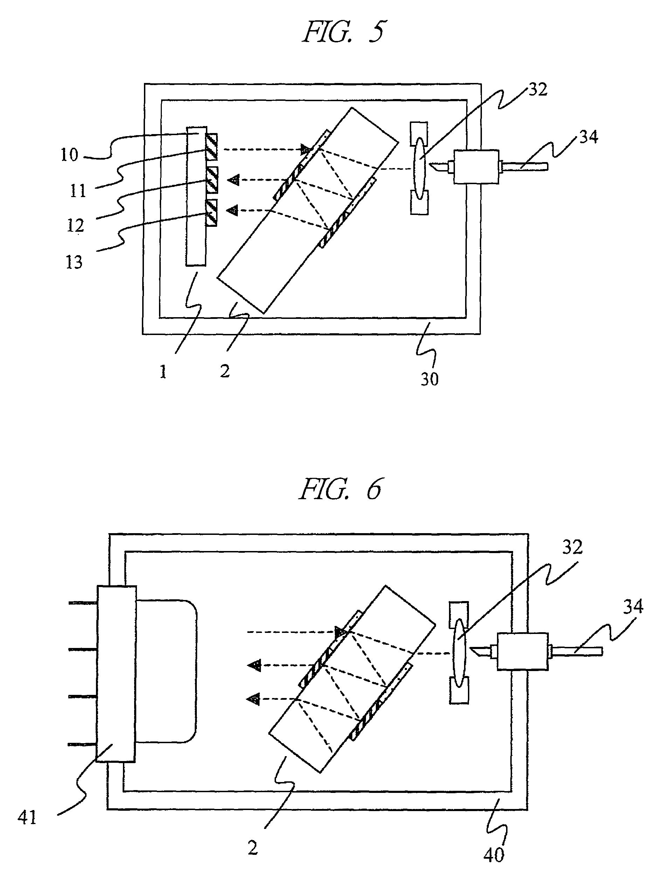

FIG. 5 is a diagram showing an optical module of a fourth embodiment of the present invention. The present embodiment is an example where the module is mounted to a planer type package. As shown in FIG. 5, the configuration of the triplexer module is made such that a planar type package 30 has mounted thereon: the optical device mounting board 1 on which the light-emitting device 11, the light-receiving devices 12 and 13 are mounted; the optical multiplexer/demultiplexer 2; a lens 32; and a single-mode fiber 34. As shown in FIG. 10, in the present embodiment, the optical device mounting board 1 having the optical devices surface-mounted thereto is mounted as soaring orthogonally from the bottom surface of the planar type package 30. As the planar type package 30, for example, a butterfly type package can be used. While the embodiment shown in FIG. 5 is compliant with triple wavelengths, a feature of the present embodiment is that it is relatively easy to be compliant with more number of wavelengths.

(Fifth Embodiment)

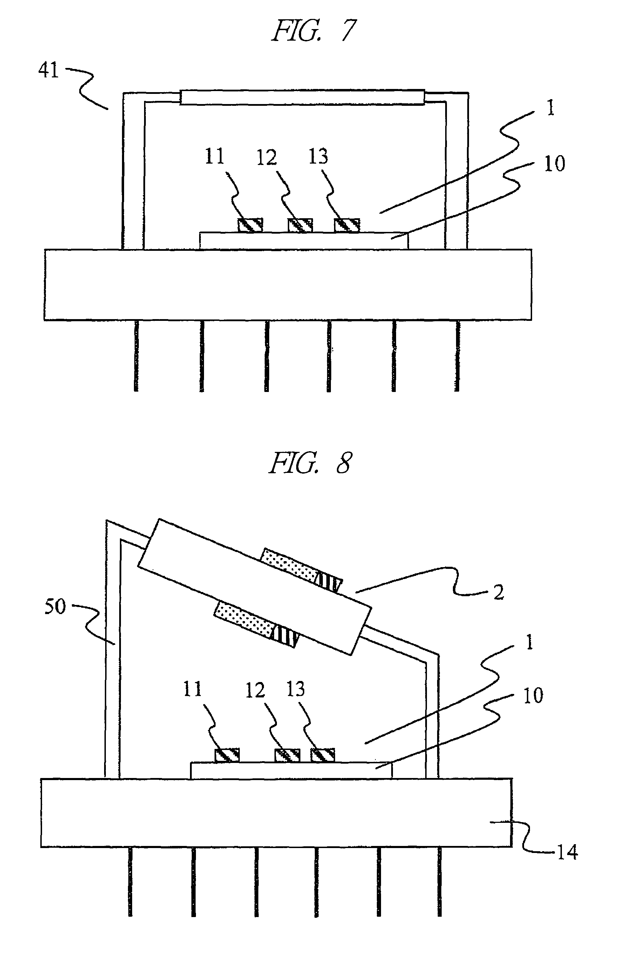

FIG. 6 and FIG. 7 are diagrams showing an optical module according to a fifth embodiment of the present invention. The present module is made by integrating optical devices in one package beforehand, and this package and an optical multiplexer/demultiplexer is mounted to another package, that is a feature of the present embodiment. The present module is configured by, as shown in FIG. 5, a planar type package having mounted thereto: an optical device mounting CAN package 41; the optical multiplexer/demultiplexer 2; the lens 32; and the single mode fiber 34. A configuration of the optical device mounting board 41 is as shown in FIG. 6, and the optical device mounting board 1 to which the optical devices 11, 12, and 13 are loaded is mounted. While the example of a planar type package is shown in the present embodiment, a module chassis other than the planer type, for example, a coaxial type package can be used.

(Sixth Embodiment)

FIG. 8 is a diagram showing an optical module according to a sixth embodiment of the present invention. The present embodiment is an example where the optical multiplexer/demultiplexer 2 is mounted to a window portion of the cap of a CAN package 50. Normally, the cap of the CAN module has a package lens and a planar glass etc. mounted thereto. As shown in FIG. 8, in the module of the present embodiment, an upper surface of the CAN package 50 has an angle not parallel to the CAN stem 14, and the optical multiplexer/demultiplexer 2 is mounted to the window portion of the CAN package 50, and thus it is achieved that the optical multiplexer/demultiplexer 2 is maintained to be unparallel to the optical device mounting board 1. Since the inclined CAN having the window portion being inclined has been widely used, the CAN package 50 of the present embodiment does not need particular cost to be manufactured. As a method of mounting the optical multiplexer/demultiplexer 2 to the CAN package 50, for example, a low-melting point glass can be used. While an example of a configuration where the window of the CAN package 50 is sealed by the optical multiplexer/demultiplexer 2 has been described, another configuration may be used where the window is sealed by a normal planer glass and the optical multiplexer/demultiplexer 2 is adhered to a lower surface or upper surface of the planer glass.

The above-mentioned features and embodiments may be combined in any way, partly or as a whole.

**Claims**

1.　An optical module comprising:

a submount provided on a CAN stem;
at least a first light-emitting device and a first light-receiving device provided on one surface of the submount and using a wavelength different to each other;
a CAN cap or a CAN package fixed on the stem and having a hole on the top for taking in and out light; and
an optical multiplexer/demultiplexer in a parallel-plate shape and having a first wavelength selective filter on one surface of a first substrate that has transmissivity to passing light, and a mirror on another surface facing the one surface of the first substrate, wherein
an extending direction of the optical multiplexer/demultiplexer is fixed in the CAN cap or the package being tilted by an angle $\theta$ (where $\theta \neq 2N\pi$, N = 0, 1, 2, ...) in a two-dimensional cross section with respect to a one surface of an optical device mounting board,
outgoing light from the first light-emitting device passes through the first wavelength selective filter and the first substrate and enters an optical fiber outside the cap, and
outgoing light from the optical fiber enters the optical multiplexer/demultiplexer and is reflected by the first wavelength selective filter and further reflected by the mirror, and then exits the optical multiplexer/demultiplexer to enter the first light-receiving device.

2.　The optical module according to claim 1, wherein
the submount comprises a second light-receiving device,
the outgoing light from the optical fiber is wavelength-multiplexed light including light having wavelengths $\lambda_2$ and $\lambda_3$ (where $\lambda_2 \neq \lambda_3$),
the outgoing light from the optical fiber enters the optical multiplexer/demultiplexer and is reflected by the first wavelength selective filter and further reflected by the mirror, and then the light having the wavelength $\lambda_2$ passes through a second wavelength selective filter provided on the one surface of the first substrate and exits the optical multiplexer/demultiplexer to enter the first light-receiving device, and

the light having the wavelength $\lambda_3$ is reflected by the second wavelength selective mirror and further reflected by the mirror, and then exits the optical multiplexer/demultiplexer to enter the second light-receiving device.

3. The optical module according to claim 1 or claim 2, wherein
an edge portion of the optical multiplexer/demultiplexer is fixed inside the cap.

4. The optical module according to any one of claims 1 to 3,
wherein in the process where the outgoing light from the optical fiber is reflected by the first wavelength selective filter and reflected again by the mirror arranged to face the first wavelength selective filter, the mirror has transmissive/reflective characteristics to transmit light within a pass band of the first wavelength selective filter.

5. The optical module according to any one of claims 1 to 4,
wherein the mirror is a wavelength selective filter which is same with the first wavelength selective filter positioned before the mirror on the light path.

6. The optical module according to any one of claims 1 to 5,
wherein a substrate member of the first substrate is amorphous glass, sapphire crystal, crystal quartz, or silicon.

7. The optical module according to any one of claims 1 to 6,
wherein the package including the stem and the cap is a metal CAN package, and concave and convex portions are provided to an inner wall part of the cap to fix the first substrate at the angle $\theta$.

8. The optical module according to any one of claims 1 to 7,
wherein the first light-emitting device is provided so as to emit light perpendicular to one surface of the optical device mounting board where the optical devices are mounted on the submount.

9. The optical module according to claim 8, wherein a lens is provided to a light-emission plane of the optical devices.

10. The optical module according to any one of claims 1 to 9,
wherein an order of alignment of the optical devices mounted in one line on the submount is in ascending order or descending order of the wavelength used by respective devices.

11. The optical module according to any one of claims 1 to 10,
wherein the outgoing light from the optical fiber or the first light-emitting device enters to the one surface of the first substrate of the optical multiplexer/demultiplexer at an incident angle $\theta_1$ (where $\theta_1 \neq 90°$) and exits at an emission angle $\theta_2$ (where $\theta_2 \neq 90°$), and light having different wavelengths is demultiplexed or multiplexed in a process of multiple reflections of the incident light between a wavelength selective filter array and a mirror array, and a relationship of a distance between a filter surface and a mirror surface d, an inclination to a horizontal surface of the filter surface $\theta_1$, an external refractive index $n_1$, and a refractive index of a chassis $n_2$ satisfies

$$z = 2d \cdot \tan\theta_2 \cdot \cos\theta_1 \geq 100 \ (\mu m).$$

12. The optical module according to any one of claims 1 to 11,
wherein the outgoing light from the optical fiber or the first light-emitting device enters to the one surface of the first substrate of the optical multiplexer/demultiplexer at an incident angle $\theta_1$ (where $\theta_1 \neq 90°$) and exits at an emission angle $\theta_2$ (where $\theta_2 \neq 90°$), and light having different wavelengths is demultiplexed or multiplexed in a process of multiple reflections of the incident light between a wavelength selective filter array and a mirror array, and when taking a distance between a filter surface and a mirror surface is d, a distance x from an optical axis of the outgoing light of the first light-emitting device to an optical axis of the incident light from the optical fiber reaching onto the one surface satisfies

$$x = d \cdot \sin(\theta_1 - \theta_2) / \cos\theta_2 \ (\mu m).$$

**13.** The optical module according to any one of claims 1 to 12,
wherein each filter configuring a filter array of the optical multiplexer/demultiplexer is an edge filter which has a property of transmitting light having a wavelength larger or equal to or smaller than or equal to a desired demultiplexing wavelength within a range of all wavelengths used by the optical devices and a property of reflecting light other than that, and an order of alignment of the edge filters on the filter array is in ascending order or descending order of the demultiplexing wavelengths.

FIG. 1

# FIG. 2

$$n_1 \sin \theta_1 = n_2 \sin \theta_2$$

$$x = d \sin(\theta_1 - \theta_2) / \cos \theta_2$$

$$y = 2d \tan \theta_2$$

$$z = 2d \tan \theta_2 \times \cos \theta_1$$

## FIG. 3

## FIG. 4

## FIG. 5

## FIG. 6

## FIG. 7

41

1

10

11  12  13

## FIG. 8

50

2

1

10

11  12  13

14

## FIG. 9

## FIG. 10

## FIG. 11

Europäisches
Patentamt

European
Patent Office

Office européen
des brevets

## EUROPEAN SEARCH REPORT

Application Number

EP 08 01 7790

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 35 46 082 A1 (ANT NACHRICHTENTECH [DE]) 21 May 1987 (1987-05-21) * the whole document * | 1-13 | INV. G02B6/34 G02B6/293 G02B6/42 |
| Y | EP 0 631 163 A (SIEMENS AG [DE]) 28 December 1994 (1994-12-28) * column 1, line 1 - column 8, line 1; figures 1-3 * | 1,2,4-13 | |
| Y | EP 1 672 402 A (INFINEON TECHNOLOGIES FIBER OP [DE]) 21 June 2006 (2006-06-21) * the whole document * | 1,3 | |
| Y | WO 02/16987 A (INFINEON TECHNOLOGIES AG [DE]; KROPP JOERG REINHARDT [DE]) 28 February 2002 (2002-02-28) * page 8, line 5 - page 11, line 20; figure 1 * | 2 | |
| Y | US 6 509 989 B1 (TSUMORI MASAHIKO [JP]) 21 January 2003 (2003-01-21) * column 3, line 52 - column 6, line 48; figures 1,2 * | 11 | TECHNICAL FIELDS SEARCHED (IPC) G02B |
| A | US 2007/051877 A1 (SAKAI KAZUHIRO [JP] ET AL) 8 March 2007 (2007-03-08) * paragraphs [0046] - [0064]; figure 1 * | 1-13 | |

The present search report has been drawn up for all claims

| Place of search | Date of completion of the search | Examiner |
|---|---|---|
| Munich | 28 January 2009 | Wolf, Steffen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 7790

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2009

| Patent document cited in search report | | Publication date | Patent family member(s) | | Publication date |
|---|---|---|---|---|---|
| DE 3546082 | A1 | 21-05-1987 | NONE | | |
| EP 0631163 | A | 28-12-1994 | US 5416624 A | | 16-05-1995 |
| EP 1672402 | A | 21-06-2006 | NONE | | |
| WO 0216987 | A | 28-02-2002 | DE 10043324 A1 | | 14-03-2002 |
| | | | EP 1311890 A1 | | 21-05-2003 |
| | | | US 2003152113 A1 | | 14-08-2003 |
| US 6509989 | B1 | 21-01-2003 | CN 1253431 A | | 17-05-2000 |
| | | | JP 3767842 B2 | | 19-04-2006 |
| | | | JP 2000137151 A | | 16-05-2000 |
| | | | TW 455715 B | | 21-09-2001 |
| US 2007051877 | A1 | 08-03-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP S61103110 B

**Non-patent literature cited in the description**

• **OHKI et al.** *IEICE Technical Report,* 13 April 2007, vol. 107 (7), 7-10